# EUROPEAN PATENT SPECIFICATION

(11) **EP 3 452 410 B1**
(45) Date of publication and mention of the grant of the patent: **02.09.2020**
(21) Application number: 17704553.1
(22) Date of filing: 16.01.2017
(51) Int. Cl.: C02F 1/32

(54) **LIQUID TREATMENT SYSTEM COMPRISING A UV LIGHT ULTRAVIOLET LAMP**
FLÜSSIGKEITSBEHANDLUNGSSYSTEM MIT EINER UV-LICHT-ULTRAVIOLETTLAMPE
SYSTÈME DE TRAITEMENT DE LIQUIDE COMPRENANT UNE LAMPE ULTRAVIOLETTE À LUMIÈRE UV

(30) Priority: 03.05.2016 SE 1650595
(43) Date of publication of application: 13.03.2019
(73) Proprietor: Wallenius Water Innovation AB, 112 51 Stockholm (SE)
(72) Inventor: STRAND, Staffan, 116 38 Stockholm (SE); ANTONSSON, Mattias, 185 94 Vaxholm (SE); BERGQVIST, Johan, 132 47 Saltsjö-Boo (SE)
(74) Representative: Brann AB
(86) International application number: PCT/SE2017/050034
(87) International publication number: WO 2017/192080

(56) References cited:
- EP-A1- 1 371 611
- EP-A1- 1 714 944
- US-A- 6 013 917
- US-B1- 6 303 087

## Description

### Technical field

The present disclosure relates to a liquid treatment system for treating a liquid with ultraviolet (UV) light, which in particular is provided with means for removing harder material from the outside of UV transparent sleeves in a treatment chamber.

### Background

There are many applications where UV light sources are used for treating liquids. Wallenius Water AB in Sweden has developed and is selling water treatment equipment having a water purifier comprising an elongated tubular treatment chamber with an inlet and an outlet. In the treatment chamber at least one generally tubular protective UV transparent sleeve (e.g. made from quartz glass) is arranged and inside the sleeve is a UV light source arranged, such as a lamp capable of generating wavelengths in the UV region.

Another type of treatment reactor developed by the applicant also comprises a treatment chamber having oppositely arranged in- and outlets, where the UV light sources are arranged in elongated sleeves, e.g. quartz glass tubes. These tubes are arranged perpendicular to the flow of liquid to be treated through the treatment chamber.

The above described treatment units are functioning very well for treating all sorts of liquids and in particular water, where the latter described treatment unit is specially adapted for treatment of ballast water in ships. The liquid that is treated often comprises particles and other solid matter other than the organisms that are killed off by the treatment units. These particles, as well as other residue from the killed off organisms, have a tendency to stick on the interior surfaces of treatment units. These particles, and other residue, aggregated on the surface are generally denoted as fouling.

UV light treatment, more specifically UV-light in combination with heat, sometimes provokes chemical reactions resulting in depositions on the interior surfaces. These resulting depositions are generally denoted as scaling.

Often scaling is more difficult to remove from the surface than fouling.

This means that in order to have an optimum efficiency of the treatment device the interior has to be cleaned regularly. According to one solution in the prior art cleaning is performed by injecting cleaning liquids into the treatment chamber, where the cleaning liquids are developed for removing the fouling or scaling on the surfaces. However, even if they are efficient for removing fouling/scaling and the like deposits on the surfaces of the treatment chambers, they require that the treatment units are closed down during a period of time, whereby thus no treatment of liquid may be performed.

According to other suggestions, various forms of wiper mechanisms have been designed to remove fouling/scaling from surfaces. All such forms of wiper mechanisms act to "wipe off' the layer from the external surface of the sleeve. Such wiper mechanisms often require a large annular space between the outside surface of the sleeve housing the UV lamp and the surrounding tubing housing the sleeve in order to accommodate the wiper mechanism. The treatment system relies on the transmittance of the fluid in order to allow the UV photons to reach the contaminants in the fluid passing through the annular region between the sleeve and housing. However, as the size of the annular region between the sleeve and tubing surrounding the sleeve increases, the effectiveness of the UV light at the outer edges of the annulus region decreases, which often impacts the efficiency of the system. Furthermore, some wiper mechanisms employ acidic solutions in the cleaning process, thus raising corrosion issues.

Some patents and patent applications within the technical field will now be briefly discussed in the following.

EP1371611 relates to a fluid treatment apparatus. A cleaning assembly comprising a plurality of cleaning heads is provided. The cleaning heads each comprise a plurality of portions of titanium dioxide which are biased against the surface of the respective UV lamps.

US5227140 relates to a modular self-cleaning oxidation chamber comprising a shuttling scraper including an annular wiper that simultaneously cleans the inside surface of the surrounding tubular module as well as the outside surface of an enclosed quartz tube. The wiper is driven by the liquid and has the form of an annular disk and being composed of a fluoroelstomer.

EP1714944 relates to a fluid disinfection apparatus of a kind similar to the apparatus of EP1371611. A cleaning material may be a fabric or metal, e.g. a metal gauze covered by titanium dioxide and may be biased into contact with the ultra-violet light source. US7159264 discloses a scraper for cleaning tubular members. The scraper comprises a plurality concatenated resilient segments adapted to contact the exterior surface the tubular member. The resilient member is made up from a resilient wire. The cleaning effect of the tubular member is achieved when the scraper is moved axially with regard to the tubular member.

USRE39522 relates to ultraviolet ray irradiation equipment having scraper rings fitted to light transmission tubes. The scraper ring defines a cleaning solution chamber to be in contact with the outer surface of a tube. The scraper may be made from a non-elastic material such as Teflon® and stainless steel. The frequency of cleaning is determined upon the quantity of scale and is exemplified as two to three times a day.

US5937266 relates to a light irradiating device equipped with a cleaning mechanism. The mechanism comprises scrapers adapted to slide along the outside surface of the light-transmitting tubes. The material used for the scraper may rubber or Teflon®, or a cleaning cloth.

EP0785907 relates to a shuttling scraper including a wiper cartridge, configured to clean the outside surface of a quartz tube. The cartridge may be filled with a scrubber material which may consist of stainless steel turnings or stainless steel wool. When the shuttling scraper is in a parked position the wiper cartridge is protected from UV radiation and the heat of the UV lamp, which also helps to extend the life of the wiper cartridge. US6303087 describes a cleaning element comprising a ring made of a relatively solid, foam-like material having an open-pore structure that annularly surrounds an encasing tube of a lamp unit.

The above prior art documents disclose various UV-light treatment apparatuses that include annular mechanical cleaning members provided with various materials for removing fouling/scaling from a UV-lamp surface.

Despite the various solutions suggested in the above prior art some drawbacks still remain in particular with regard to remove harder material, i.e. scaling, from the outer surface of the UV-transparent sleeve enclosing the UV-lamp.

The object of the present invention is to achieve an improved liquid treatment system provided with means capable of efficiently removing harder material from the outer surface of the sleeve.

### Summary

The above-mentioned object is achieved by the present invention according to the independent claim.

Preferred embodiments are set forth in the dependent claims.

Generally, the liquid treatment system presented herein relates to a mechanical cleaning system for cleaning an outer surface of an ultraviolet transparent sleeve, or for preventing fouling or scaling from aggregating on the outer surface, applicable for UV radiation treatment of liquids, e.g. ballast water or opaque liquids.

The liquid treatment system comprises at least one cleaning unit having a general shape of a cylinder having a circular cross-section, and which is structured to be arranged around the sleeve surrounding the UV-lamp, and is configured to be moved along the sleeve in order to perform cleaning of the outer surface of the sleeve.

The inward facing surface of the cleaning unit is provided with a first cleaning member being resiliently biased to the outer surface by a biasing member.

The first cleaning member is structured to remove harder material, e.g. scaling, from the outer surface of the sleeve and is made from a spun, entangled, knitted or woven fibre cleaning material, and that the first cleaning member has a tube-like shape, and a length L along the longitudinal axis A of the treatment chamber, such that a cleaning area is obtained defined by the length L and an outer diameter d of the sleeve. Furthermore, the biasing member is made from a material and is structured to apply an essentially even biasing force to substantially the entire cleaning area.

### Brief description of the drawings

Figure 1 is a longitudinal cross-sectional view illustrating the liquid treatment system according to the present invention.
Figure 2 is an end view of a cleaning unit according to an embodiment of the present invention.
Figure 3 is a longitudinal cross-sectional view along A-A in figure 2 of an embodiment of the present invention.
Figure 4 is a side view of a cleaning unit according to an embodiment of the present invention.
Figure 5 is a perspective view of a cleaning unit according to an embodiment of the present invention.
Figure 6 is an end view of a cleaning arrangement according to an embodiment of the present invention.
Figure 7 is a longitudinal cross-sectional view along A-A in figure 6 of an embodiment of the present invention.
Figure 8 is a top view and a perspective view of a driving wagon according to an embodiment according to the present invention.
Figures 9 and 10 are perspective views illustrating the cleaning arrangement according to an embodiment of the present invention.
Figure 11 is a perspective view illustrating an end of a liquid treatment system according to one embodiment of the present invention.

### Detailed description

The liquid treatment system will now be described in detail with references to the appended figures. Throughout the figures the same, or similar, items have the same reference signs. Moreover, the items and the figures are not necessarily to scale, emphasis instead being placed upon illustrating the principles of the invention.

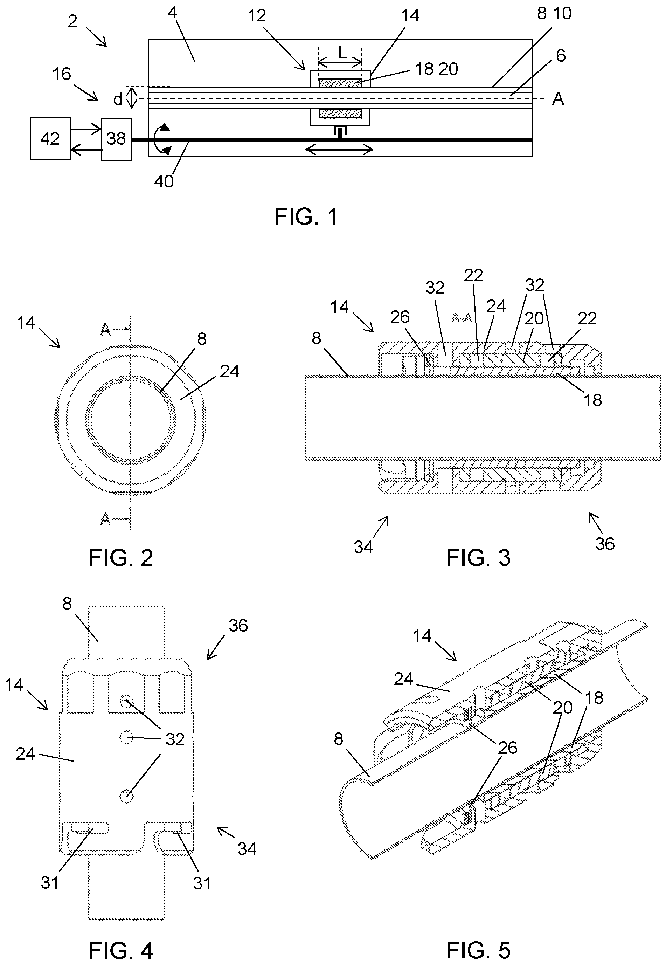

First with references to the schematic illustration in figure 1 a longitudinal cross-sectional view of the liquid treatment system is shown.

The liquid treatment system 2 comprises an elongated liquid treatment chamber 4 for receiving fluid, e.g. water, to be treated.

The treatment chamber is provided with at least one ultra-violet (UV) light treatment lamp 6. Each UV-lamp is arranged within a protective UV-transparent sleeve 8 having an outer surface along a longitudinal axis A.

In one exemplary application the inner diameter of the treatment chamber is 270 mm and three UV-lamps are used each being installed inside a sleeve, and that the outer diameter of each sleeve is 36 mm.

The UV-transparent sleeve 8 has an outer surface 10 and an essentially circular cross-sectional shape. As discussed above, during use of the treatment system, e.g. for treating ballast water, particles have the tendency to adhere to the outer surface resulting in fouling, and the UV-light in combination with heat sometimes provokes chemical reactions resulting in depositions on the surface, which are denoted scaling. Both fouling and scaling adversely affect the UV-light treatment of the liquid as the UV-light intensity into the treatment chamber may be reduced.

Furthermore, the liquid treatment system 2 comprises a cleaning arrangement 12 comprising at least one cleaning unit 14 configured to be moved by a driving arrangement 16 structured to drive the cleaning unit 14 in the treatment chamber 4 along the sleeve 8. The cleaning unit 14 comprises a first cleaning member 18 configured to be circumferentially arranged around the sleeve 8 and being resiliently biased to the outer surface 10 by a biasing member 20.

The first cleaning member 18 is structured to remove harder material, i.e. scaling, from the outer surface 10 of the sleeve 8 and is made from a spun, entangled, knitted or woven fibre cleaning material.

By "harder" material is meant a material that fulfils some objective criteria of hardness. One such criterion is the Mohs scale of mineral hardness characterizes the scratch resistance of various minerals through the ability of a harder material to scratch a softer material. Herein the sleeve in one exemplary embodiment is made from quartz glass. The requirement of the first cleaning member would be that it may be capable to remove scaling without causing adverse scratches of the outer surface of the sleeve that may diffuse the transmitted UV-light.

The first cleaning member 18 has a tube-like shape, and a length L along axis A, such that a cleaning area is obtained defined by the length L and an outer diameter d of the sleeve 8. The biasing member 20 is made from a material structured to apply an essentially even biasing force to substantially the entire cleaning area.

In one embodiment the length L is in the range of 10-200 mm, and more particularly in the range of 10-70 mm, and the diameter d of the sleeve is in the range of 20-50 mm, and more particularly in the range of 30-45 mm. In one specific example the outer diameter d is 36 mm.

The cleaning area is determined by L × d × π. In the example where d is 36 mm, and the length ranges from 10-50 mm, the cleaning area is in the range of approximately 10 - 56 cm².

In one embodiment the cleaning material includes a ceramic grinding material.

And preferably the cleaning material is made from an abrasive spun polypropylene fibre. One suggested cleaning material is Scotch-Brite™, which is a line of abrasive cleaning pads produced by 3M. The original product line consisted of spun polypropylene fibre. Alternatively the cleaning material is made from steel, titanium or silicon carbide.

As mentioned above the biasing member 20 is structured to constantly apply an essentially even biasing force to almost the entire first cleaning material. Thereby, the cleaning effect is obtained by the entire cleaning surface area which is advantageous, and in addition, the cleaning effect is achieved even if the UV-transparent sleeve is not entirely straight along axis A.

The biasing member 20 is a sheet-like material having a predetermined thickness and being arranged outside the first cleaning member 18. The thickness is naturally related to the size of the sleeve, but is advantageously in the range of 5-15 mm.

The biasing member 20 is made from an open cell foam material, preferably an open cell silicone foam material, and is composed of connected cells that allow liquid to pass through the material. These open cell sponges offer good compression set characteristics, and typically rebound faster than closed cell sponges.

Advantageously the biasing member 20 is provided with through-going radially directed openings 22 to promote flow of liquid to and from the cleaning member. Each of the through-going openings 22 may have a width in the range of 1-10 mm. This is in particular illustrated in figures 3-5. Preferably the openings are evenly distributed on the biasing member, and the number of openings may be in the range of 5-25.

With references to figures 2-5 various features of the cleaning unit will now be described. Figure 2 is an end view of a cleaning unit according to an embodiment of the present invention, and figure 3 is a longitudinal cross-sectional view along A-A in figure 2 of an embodiment of the present invention.

Figure 4 is a side view, and figure 5 is a perspective view, of a cleaning unit according to an embodiment of the present invention.

In the illustrated embodiment the cleaning unit 14 has a general shape of a tubular body 24 having an inner circular cross-sectional shape adapted to the outer diameter of the sleeve 8. The inner shape is dimensioned such that when the biasing force is applied to the first cleaning member the cleaning unit may be moved along the sleeve with some resistance to achieve the cleaning effect.

In order to improve the cleaning effect, the cleaning unit 14 preferably comprises at least one second cleaning member 26 (see figures 3 and 5), structured to remove loose material, e.g. fouling, from outside of sleeve. The second cleaning member 26 has a ring-like shape and is preferably made from a soft, elastic material, e.g. rubber.

The second cleaning member 26 is preferably arranged close to a first end 34 of the cleaning unit 14, which is the end of the cleaning unit that is in front when the cleaning unit is moved in a primary cleaning direction. Thereby the second cleaning member 26 may remove loose material from a particular location of the outer surface of the sleeve before the first cleaning member 18 reaches the same location.

In another embodiment a further second cleaning member may be provided at the other end of the cleaning unit, close to a second end 36.

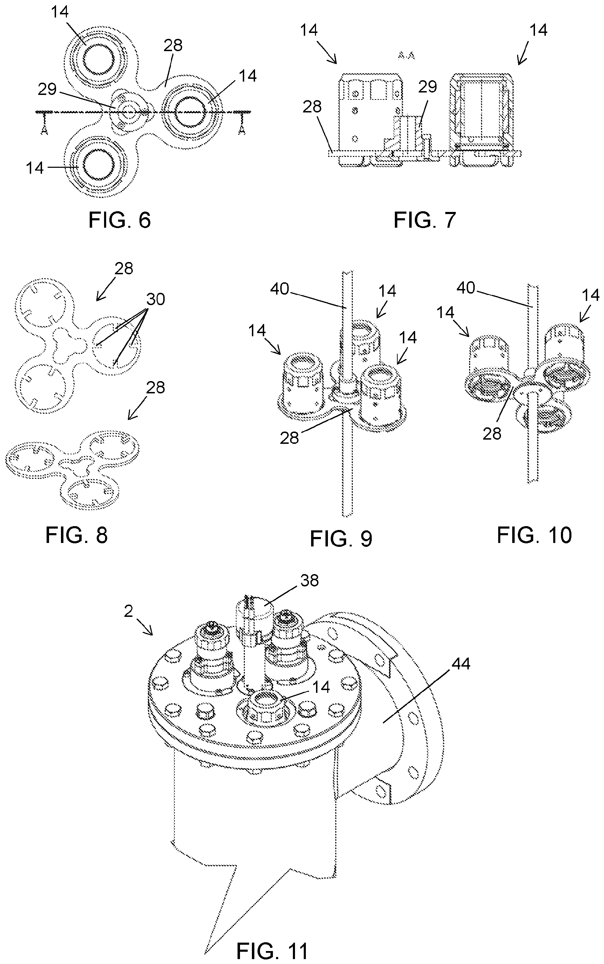

In order to move the cleaning units along the treatment chamber a driving arrangement 16 is provided that is generally illustrated in figure 1. In figures 6-10 various aspects and features of the driving arrangement will be described in detail.

In particular, figure 6 is an end view of a cleaning arrangement according to an embodiment of the present invention.

Figure 7 is a longitudinal cross-sectional view along A-A in figure 6 of an embodiment of the present invention.

Figure 8 is a top view and a perspective view of a driving wagon according to an embodiment according to the present invention.

Figures 9 and 10 are perspective views illustrating the cleaning arrangement according to an embodiment of the present invention.

Among other things the driving arrangement 16 comprises a driving wagon 28 provided with actuation members 30 structured to apply driving forces to the cleaning units 14 along axis A, such that it allows the cleaning units 14 to make small movements in a plane perpendicular to axis A in order to follow the contour of the sleeve. In detail this is achieved by providing a radial distance between the inwardly directed end of the actuation member and the sleeve. Thus, the cleaning units are free floating in relation to the driving wagon. Thereby continuous cleaning of the outer surface of the sleeve is ascertained.

In the illustrated embodiment the cleaning unit is attached to the driving wagon by a bayonet connection. The actuation members are structured to cooperate with corresponding fastening members 31 (see figure 4) provided close to the first 34 end of the cleaning unit.

The driving arrangement 16 includes a driving actuator 38, e.g. a motor, a driving shaft 40, and the driving wagon 28, e.g. a plate which is illustrated in the figures, to hold the at least one cleaning unit 14. The driving actuator 38 is configured to rotate the shaft 40 about its axis which is illustrated in figure 1, so as to drive the driving wagon via a wagon coupling member 29, and thus the cleaning unit(s) along the treatment chamber in a direction according to the direction of shaft rotation.

The cleaning arrangement further comprises a control unit 42 configured to control the movement of the driving wagon 28 including the one or many cleaning units, by generating and applying a control signal to the driving actuator. The control unit is further configured to receive a motor torque signal including information of the torque generated by the driving actuator. If the torque is above a predetermined torque threshold it is considered that the cleaning arrangement with the cleaning units is in an end position, and the driving motor is then controlled to either stop or change direction. The control unit may be implemented by any processing apparatus having the capability of receiving input instructions and signals, executing control algorithms and generating control signals, e.g. a personal computer or dedicated processor equipment.

The speed of movement of the cleaning arrangement, and the frequency of cleaning, may vary in dependence of the application. In one non-limiting example the speed of movement is such that it takes 10-20 seconds for the cleaning arrangement to move from one end of the treatment chamber to the other. This cleaning procedure may be repeated 3-10 times per 24 hours.

When the cleaning arrangement is in its passive position it is preferably parked at one of the ends of the treatment chamber such that the first cleaning member, and also the second cleaning member, is protected from receiving ultraviolet light which may decrease the cleaning effect of the cleaning members.

Finally, figure 11 illustrates a perspective view of one end of a liquid treatment system 2 according to one embodiment of the present invention. In the figure is shown a tubular inlet/outlet-connection 44 for feeding liquid to the treatment chamber. In this embodiment three UV-lamps are provided enclosed in its respective sleeve. In the figure the mechanical and electrical connections to one of the lamps has been removed in order to illustrate the position of the cleaning unit 14 when in a parked position. The second end 36 is readily available and the cleaning unit may easily be removed from the driving wagon by rotating it to a position where the actuation members and the fastening members allows removal of the cleaning unit.

## Claims

1. A liquid treatment system (2) comprising an elongated liquid treatment chamber (4) for receiving fluid, e.g. water, to be treated, the treatment chamber is provided with at least one ultra-violet (UV) light treatment lamp (6) arranged within an elongated protective UV-transparent sleeve (8) along a longitudinal axis A and having an outer surface (10) and an essentially circular cross-sectional shape,
the liquid treatment system (2) comprises a cleaning arrangement (12) comprising at least one cleaning unit (14) configured to be moved by a driving arrangement (16) structured to drive the cleaning unit (14) in said treatment chamber (4) along said sleeve (8),
the cleaning unit (14) comprises a first cleaning member (18) configured to be circumferentially arranged around said sleeve (8) and being resiliently biased to said outer surface (10) by a biasing member (20), **characterized in that** the first cleaning member (18) is structured to remove harder material, i.e. scaling, from the outer surface (10) of the sleeve (8) and is made from a spun, entangled, knitted or woven fibre cleaning material, wherein the cleaning material includes a ceramic grinding material or wherein the cleaning material is made from an abrasive spun polypropylene fibre or wherein the cleaning material is made from steel, titanium or silicon carbide, and that the first cleaning member (18) has a tube-like shape, and a length L along axis A, such that a cleaning area is obtained defined by said length L and an outer diameter d of said sleeve (8), wherein the biasing member (20) is made from a material structured to apply an essentially even biasing force to substantially the entire cleaning area, wherein the biasing member (20) is made from an open cell foam material, wherein said biasing member (20) is a sheet-like material having a predetermined thickness and being arranged outside said first cleaning member (18).

2. The liquid treatment apparatus (2) according to claim 1, wherein said length L is in the range of 10-200 mm.

3. The liquid treatment apparatus (2) according to any of claims 1 -2, wherein said biasing member (20) is composed of connected cells that allow liquid to pass through the material.

4. The liquid treatment apparatus (2) according to any of claims 1 -3, wherein said biasing member (20) is provided with through-going radially directed openings (22) to promote flow of liquid to and from said cleaning member.

5. The liquid treatment apparatus (2) according to claim 4, wherein each of said through-going openings (22) has a width in the range of 1-10 mm.

6. The liquid treatment apparatus (2) according to any of claims 1 -5, wherein the cleaning unit (14) has a general shape of a tubular body (24) having an inner circular cross-sectional shape adapted to the outer diameter d of said sleeve (8).

7. The liquid treatment apparatus (2) according to any of claims 1 -6, wherein the cleaning unit (14) comprises at least one second cleaning member (26), structured to remove loose material, e.g. fouling, from outside of sleeve and is made from a soft, elastic material, e.g. made from rubber.

8. The liquid treatment apparatus (2) according to any of claims 1-7, wherein the driving arrangement (16) comprises a driving wagon (28) provided with actuation members (30) structured to apply driving forces to said cleaning units (14) along said axis A, and to allow the cleaning units (14) to make small movements in a plane perpendicular to axis A.

## Patentansprüche

1. Flüssigkeitsbehandlungssystem (2), umfassend eine längliche Flüssigkeitsbehandlungskammer (4) zum Aufnehmen von Fluid, z. B. Wasser, um behandelt zu werden, wobei die Behandlungskammer mit mindestens einer ultravioletten (UV) Lichtbehandlungslampe (6) versehen ist, die in einer länglichen UV-transparenten Schutzhülle (8) entlang einer Längsachse A angeordnet ist und eine Außenfläche (10) und eine im Wesentlichen kreisförmige Querschnittsform aufweist,
wobei das Flüssigkeitsbehandlungssystem (2) eine Reinigungsanordnung (12) umfasst, die mindestens eine Reinigungseinheit (14) umfasst, die dazu konfiguriert ist, durch eine Antriebsanordnung (16) bewegt zu werden, die dazu ausgestaltet ist, die Reinigungseinheit (14) in der Behandlungskammer (4) entlang der Hülle (8) anzutreiben,
wobei die Reinigungseinheit (14) ein erstes Reinigungselement (18) umfasst, das dazu konfiguriert ist, in Umfangsrichtung um die Hülle (8) angeordnet zu sein und elastisch zu der Außenfläche (10) durch ein Vorspannelement (20) vorgespannt zu werden, **dadurch gekennzeichnet, dass** die erste Reinigungseinheit (18) dazu ausgestaltet ist, härteres Material von der Außenfläche (10) der Hülle (8) zu entfernen, d. h. nachbrechen, und aus einem gesponnenen, verflochtenen oder gewebten Faserreinigungsmaterial gefertigt ist, wobei das Reinigungsmaterial ein keramisches Schleifmaterial beinhaltet oder wobei das Reinigungsmaterial aus gesponnener Schleifmittel-Polypropylenfaser gefertigt ist oder wobei das Reinigungsmaterial aus Stahl, Titan oder Silikonkarbid gefertigt ist, und dass das erste Reinigungselement (18) eine röhrenförmige Form und eine Länge L entlang Achse A aufweist, sodass man einen Reinigungsbereich erhält, der durch die Länge L und ein Außendurchmesser d der Hülle (8) definiert ist, wobei das Vorspannelement (20) aus einem Material gefertigt ist, das dazu ausgestaltet ist, eine im Wesentlichen gleichförmige Vorspannkraft auf im Wesentlichen den gesamten Reinigungsbereich aufzubringen, wobei das Vorspannelement (20) aus einem offenzelligen Schaummaterial gefertigt ist, wobei das Vorspannelement (20) ein bahnförmiges Material ist, das eine vorbestimmte Dicke aufweist und außerhalb des ersten Reinigungselements (18) angeordnet ist.

2. Flüssigkeitsbehandlungssystem (2) nach Anspruch 1, wobei die Länge L im Bereich von 10 bis 200 mm liegt.

3. Flüssigkeitsbehandlungssystem (2) nach einem der Ansprüche 1 bis 2, wobei das Vorspannelement (20) aus verbundenen Zellen besteht, die Flüssigkeit durch das Material dringen lassen.

4. Flüssigkeitsbehandlungssystem (2) nach einem der Ansprüche 1 bis 3, wobei das Vorspannelement (20) mit durchgehenden radial ausgerichteten Öffnungen (22) versehen ist, um das Fließen von Flüssigkeit zu und von dem Reinigungselement zu fördern.

5. Flüssigkeitsbehandlungssystem (2) nach Anspruch 4, wobei jede der durchgehenden Öffnungen (22) eine Breite im Bereich von 1 bis 10 mm aufweist.

6. Flüssigkeitsbehandlungssystem (2) nach einem der Ansprüche 1 bis 5, wobei die Reinigungseinheit (14) eine allgemeine Form eines röhrenförmigen Körpers (24) aufweist, der eine innere kreisförmige Querschnittsform aufweist, die an den Außendurchmesser d der Hülle (8) angepasst ist.

7. Flüssigkeitsbehandlungssystem (2) nach einem der Ansprüche 1 bis 6, wobei die Reinigungseinheit (14) mindestens ein zweites Reinigungselement (26) umfasst, das dazu ausgestaltet ist, loses Material, z. B. Verunreinigungen, von der Außenseite der Hülle zu entfernen, und aus einem weichen, elastischen Material gefertigt ist, z. B. aus Gummi gefertigt.

8. Flüssigkeitsbehandlungssystem (2) nach einem der Ansprüche 1 bis 7, wobei die Antriebsanordnung (16) einen Antriebswagen (28) umfasst, der mit Betätigungselementen (30) versehen ist, die dazu ausgestaltet sind, Antriebskräfte auf die Reinigungseinheiten (14) entlang der Achse A aufzubringen und es den Reinigungseinheiten (14) zu ermöglichen, kleine Bewegungen auf einer Ebene durchzuführen, die senkrecht zur Achse A ist.

## Revendications

1. Système de traitement de liquide (2) comprenant une chambre de traitement de liquide allongée (4) pour recevoir un fluide, par exemple de l'eau, à traiter, la chambre de traitement est munie d'au moins une lampe de traitement à lumière ultraviolette (UV) (6) agencée au sein d'un manchon transparent de protection contre les UV allongé (8) le long d'un axe longitudinal A et ayant une surface externe (10) et une forme en section transversale essentiellement circulaire,
le système de traitement de liquide (2) comprend un agencement de nettoyage (12) comprenant au moins une unité de nettoyage (14) conçue pour être déplacée par un agencement d'entraînement (16) structuré pour entraîner l'unité de nettoyage (14) dans ladite chambre de traitement (4) le long dudit manchon (8),
l'unité de nettoyage (14) comprend un premier organe de nettoyage (18) conçu pour être agencé circonférentiellement autour dudit manchon (8) et étant sollicité de façon résiliente vers ladite surface externe (10) par un organe de sollicitation (20), **caractérisé en ce que** le premier organe de nettoyage (18) est structuré pour éliminer un matériau plus dur, par exemple un dépôt, de la surface externe (10) du manchon (8) et est constitué d'un matériau de nettoyage en fibre filée, enchevêtrée, tricotée ou tissée, dans lequel le matériau de nettoyage comporte un matériau de broyage céramique ou dans lequel le matériau de nettoyage est constitué d'une fibre en polypropylène filée abrasive ou dans lequel le matériau de nettoyage est constitué d'acier, de titane ou de carbure de silicium, et **en ce que** le premier organe de nettoyage (18) présente une forme de type tubulaire, et une longueur L le long de l'axe A, de telle sorte qu'une zone de nettoyage est obtenue, définie par ladite longueur L et un diamètre externe d dudit manchon (8), dans lequel l'organe de sollicitation (20) est constitué d'un matériau structuré pour appliquer une force de sollicitation essentiellement uniforme sur sensiblement la zone de nettoyage entière, dans lequel l'organe de sollicitation (20) est constitué d'un matériau en mousse à cellules ouvertes, dans lequel ledit organe de sollicitation (20) est un matériau de type feuille ayant une épaisseur prédéterminée et étant agencé à l'extérieur dudit premier organe de nettoyage (18).

2. Appareil de traitement de liquide (2) selon la revendication 1, dans lequel ladite longueur L est dans la plage de 10 à 200 mm.

3. Appareil de traitement de liquide (2) selon l'une quelconque des revendications 1 et 2, dans lequel ledit organe de sollicitation (20) est composé de cellules reliées qui permettent à un liquide de passer à travers le matériau.

4. Appareil de traitement de liquide (2) selon l'une quelconque des revendications 1 à 3, dans lequel ledit organe de sollicitation (20) est muni d'ouvertures dirigées radialement traversantes (22) pour favoriser un écoulement de liquide depuis et vers ledit organe de nettoyage.

5. Appareil de traitement de liquide (2) selon la revendication 4, dans lequel chacune desdites ouvertures traversantes (22) présente une largeur dans la plage de 1 à 10 mm.

6. Appareil de traitement de liquide (2) selon l'une quelconque des revendications 1 à 5, dans lequel l'unité de nettoyage (14) présente une forme générale d'un corps tubulaire (24) ayant une forme en section transversale circulaire interne adaptée au diamètre externe d dudit manchon (8).

7. Appareil de traitement de liquide (2) selon l'une quelconque des revendications 1 à 6, dans lequel l'unité de nettoyage (14) comprend au moins un second organe de nettoyage (26), structuré pour éliminer un matériau lâche, par exemple un encrassage, depuis l'extérieur du manchon et est constitué d'un matériau élastique souple, par exemple constitué de caoutchouc.

8. Appareil de traitement de liquide (2) selon l'une quelconque des revendications 1 à 7, dans lequel l'agencement d'entraînement (16) comprend un chariot d'entraînement (28) muni d'organes d'actionnement (30) structurés pour appliquer des forces d'entraînement auxdites unités de nettoyage (14) le long dudit axe A, et pour permettre aux unités de nettoyage (14) d'effectuer de petits déplacements dans un plan perpendiculaire à l'axe A.
